# EUROPEAN PATENT APPLICATION

(11) **EP 4 585 871 A1**
(43) Date of publication of application: **16.07.2025**
(21) Application number: 23862301.1
(22) Date of filing: 01.09.2023
(51) Int. Cl.: F25B 33/00, F25B 37/00, F25B 41/40, F25B 39/02, F25B 39/04

(54) **GENERATOR**

(30) Priority: 05.09.2022 CN 202211079385
(71) Applicant: York (Wuxi) Air Conditioning And Refrigeration Co., Ltd., Wuxi Jiangsu 214028 (CN); Tyco Fire & Security GmbH, 8212 Neuhausen am Rheinfall (CH)
(72) Inventor: ZANG, Yunliang, Wuxi, Jiangsu 214028 (CN); ZHOU, Luyun, Wuxi, Jiangsu 214028 (CN); ZHU, Chen, Wuxi, Jiangsu 214028 (CN); DOI, Shigehiro, Milwaukee Wisconsin 53209 (US)
(74) Representative: Meissner Bolte Nürnberg
(86) International application number: PCT/CN2023/116563
(87) International publication number: WO 2024/051607

(57) **Abstract**

A generator (120), comprising: a housing (200), and a housing accommodating cavity (303) defined by the housing (200). The housing accommodating cavity (303) comprises an upper accommodating cavity portion (304), a middle accommodating cavity portion (306) and a lower accommodating cavity portion (308), wherein a first heat-exchange tube group (382) is arranged in the upper accommodating cavity portion (304), and is immersed in an upper solution; a second heat-exchange tube group (384) is arranged in the lower accommodating cavity portion (308); and a distributor (307) is arranged in the middle accommodating cavity portion (306), and the distributor (307) receives the upper solution from the upper accommodating cavity portion (304) and distributes the upper solution discharged from the upper accommodating cavity portion (304) onto the second heat-exchange tube group (384). By means of dividing a heat-exchange tube group into two heat-exchange tube groups, the height of the upper flooded heat-exchange tube group (382) is decreased, thereby reducing the influence of hydrostatic pressure on a bottom pipeline; and the lower falling-film heat-exchange tube group (384) is far away from a high-temperature heat source inlet, which effectively prevents the solution from crystallizing at the falling-film heat-exchange tube group due to an excessive temperature difference.

## Description

### Technical Field

The present application relates to a generator, in particular to a generator using a solution (for example, a lithium bromide solution) as an absorbent.

### Background Art

Some air conditioning systems comprise generators. Such air conditioning systems require the injection of a dilute solution (for example, a dilute lithium bromide solution) into the generators during operations. The function of the generators is to use a heat source to heat a dilute solution, causing the dilute solution to generate refrigerant vapor. During operations, the original dilute solution is concentrated into a concentrated solution. The generators have two working modes: flooded generators and falling-film generators. The flooded generators are a kind of heat-exchange devices in which their heat-exchange tubes are immersed in a dilute solution, a high-temperature heat source flows in the tubes to heat the solution outside the tubes, and the solution is concentrated and generates refrigerant vapor. The falling-film generators are a kind of heat-exchange devices in which the solution is distributed on outer walls of their heat-exchange tubes, the solution is attached to the outer walls of the heat tubes in a film-like form, such that the solution is concentrated and generates refrigerant vapor.

### Summary of the Invention

The disadvantage of a flooded generator is that when the flooded generator works, a solution enters the high generator, and a heat-exchange tube group is full of solution. However, due to the influence of hydrostatic pressure, a boiling point of the solution in the heat-exchange tube group at the bottom of the flooded generator is high, and the heat transfer temperature difference becomes smaller, causing the heat-exchange efficiency of the flooded generator to gradually decrease from the top to the bottom of the heat-exchange tube group.

The disadvantage of a falling-film generator is that when the falling-film generator works, the solution is evenly distributed on the top of the heat-exchange tube group through a distributor, is concentrated in a film-like form on outer walls of heat-exchange tubes, and generates refrigerant vapor. The concentrated solution drips to the heat-exchange tubes in a lower row to continue concentrating. Because the heat-exchange tubes of a falling-film portion of the generator are at a high-temperature heat source inlet, the heat source temperature at the high-temperature heat source inlet is high, the heat transfer temperature difference is large, and the solution boils violently. Therefore, more refrigerant vapor is generated per unit solution, and the solution concentration is higher. If the falling-film generator cannot provide a sufficient amount of solution in a high-temperature heat source portion and form uniform falling films on the surfaces of the heat-exchange tubes, crystallization points may be formed on the surfaces of the heat-exchange tubes.

In order to overcome the disadvantages of the flooded generator and the falling-film generator, the present application divides the generator into three portions: an upper accommodating cavity portion, a middle accommodating cavity portion, and a lower accommodating cavity portion. The upper accommodating cavity portion comprises a flooded heat-exchange tube group, which operates in a flooded mode; the lower accommodating cavity portion comprises a falling-film heat-exchange tube group, which operates in a falling-film mode; and a distributor in the middle accommodating cavity portion introduces the solution in the upper accommodating cavity portion onto an outer wall of the falling-film heat-exchange tube group of the lower accommodating cavity portion.

The working process of the generator of the present application is as follows: a dilute solution enters the flooded heat-exchange tube group on a shell pass from an upper portion of the generator, the dilute solution is heated by the heat source in tubes and concentrated to generate refrigerant vapor to become an intermediate concentration solution, and the intermediate concentration solution flows out from a weir and enters the distributor via a pipeline. The intermediate concentration solution is evenly dripped through the distributor on the outer wall of the falling-film heat-exchange tube group (comprising at least one row of heat-exchange tubes) to form a liquid film. The liquid film is further heated and concentrated to generate refrigerant vapor to become a concentrated solution, and the refrigerant vapor flows out from channels on both sides. The fluid heat source (for example, high-temperature vapor or hot water) on a tube pass side first enters the flooded heat-exchange tube group, and condenses into condensate water (or the temperature of the hot water decreases) after heating the dilute solution. The condensate water enters the falling-film heat-exchange tube group to further heat the solution before being discharged.

The structure of the present application has at least two technical effects: first, for the upper flooded working mode, because the heat-exchange tube group is divided into two heat-exchange tube groups (flooded heat-exchange tube group and falling-film heat-exchange tube group), the height of the upper flooded heat-exchange tube group is decreased. Due to the decreased height, the influence of hydrostatic pressure on the bottom pipeline is reduced; Second, for the lower falling-film type, because the high-temperature heat source enters the flooded portion first, a low-temperature heat source enters a falling-film portion, which may effectively prevent the solution from crystallizing due to an excessive temperature difference at the falling-film heat-exchange tube group. Moreover, the heat-exchange tubes of the falling-film portion of the generator are not at the high-temperature heat source inlet, thereby further preventing crystallization generated by an excessive temperature difference.

Specifically, according to a first aspect of the present application, a generator is provided, comprising a housing and a housing accommodating cavity defined by the housing, wherein: the housing accommodating cavity comprises an upper accommodating cavity portion, a middle accommodating cavity portion, and a lower accommodating cavity portion, the middle accommodating cavity portion is arranged between the upper accommodating cavity portion and the lower accommodating cavity portion, a first heat-exchange tube group is arranged in the upper accommodating cavity portion, and an upper solution is accommodated in the upper accommodating cavity portion; and the first heat-exchange tube group is at least partially immersed in the upper solution, at least one row of second heat-exchange tube groups is arranged in the lower accommodating cavity portion, a distributor is arranged in the middle accommodating cavity portion, and the distributor receives the upper solution from the upper accommodating cavity portion and distributes the upper solution discharged from the upper accommodating cavity portion onto the second heat-exchange tube group.

According to the first aspect of the present application, wherein: a container is further arranged on the upper accommodating cavity portion, and the upper solution is accommodated in the container.

According to the first aspect of the present application, wherein: a solution introduction channel is further provided in the housing accommodating cavity, and the solution introduction channel introduces the upper solution into the distributor.

According to the first aspect of the present application, wherein: the upper accommodating cavity portion is further provided with a weir, and the weir constitutes a fluid inlet of the solution introduction channel.

According to the first aspect of the present application, wherein: the first heat-exchange tube group is completely immersed in the upper solution, wherein the height of the weir is set at a position which is not lower than an uppermost end of the first heat-exchange tube group.

According to the first aspect of the present application, wherein: the generator further comprises: a fluid inlet and a fluid outlet, wherein the fluid inlet is in fluid communication with the first heat-exchange tube group and is used for inputting a fluid heat source into the first heat-exchange tube group, the fluid heat source heats the upper solution and then flows into the second heat-exchange tube group to continue heating a lower solution distributed on the second heat-exchange tube group in the process of flowing through the first heat-exchange tube group, and the fluid heat source heats the lower solution and then is discharged from the fluid outlet.

According to the first aspect of the present application, wherein: a distribution channel is provided in the distributor, and the distribution channel distributes the solution introduced from the upper accommodating cavity portion onto the second heat-exchange tube group.

According to the first aspect of the present application, wherein: the distribution channel is a through hole.

According to the first aspect of the present application, wherein: calibers of heat-exchange tubes on both sides of the second heat-exchange tube group are smaller than calibers of heat-exchange tubes in the middle portion of the second heat-exchange tube group.

According to the first aspect of the present application, wherein: the housing accommodating cavity further comprises: a solution replenishment inlet, and the solution replenishment inlet is used for replenishing the distributor with a solution.

According to the first aspect of the present application, wherein: a bottom of the distributor is placed obliquely along a length direction of the generator, such that the bottom of the distributor has an inclination angle along the length direction.

According to the first aspect of the present application, wherein: the inclination angle of the bottom of the distributor is within 5°.

According to the first aspect of the present application, wherein: a bottom of the upper accommodating cavity portion is provided with a through hole, such that the bottom of the upper accommodating cavity portion constitutes the distributor.

According to the first aspect of the present application, wherein: the housing further comprises a housing wall, and the generator further comprises two solution inlets, wherein the two solution inlets are used for inputting the upper solution, the two solution inlets pass through the housing wall, respectively, from both ends of an upper portion of the housing accommodating cavity to enter an interior of the housing accommodating cavity, and the weir is arranged at a position between the two solution inlets.

According to the first aspect of the present application, wherein: fins are provided on the second heat-exchange tube group, or a surface of the second heat-exchange tube group is a rough surface.

According to a second aspect of the present application, an air conditioning system is provided, wherein: the air conditioning system comprises the generator according to the first aspect of the present application.

### Brief Description of the Drawings

These and other features and advantages of the present application may be better understood by reading the following detailed description with reference to the accompanying drawings, in which like reference numerals designate like components, wherein:
FIG. 1A shows a schematic block diagram of a component of an air conditioning system 100 of the present application;
FIG. 1B shows another schematic block diagram of the component of the air conditioning system 100 of the present application;
FIG. 2A shows a side cross-sectional view of an internal structure of a generator shown in FIGs 1A-1B, which shows a first embodiment of the generator of the present application;
FIG. 2B shows a top view of the generator shown in FIG. 2A;
FIG. 3A shows a cross-sectional view along line A-A in FIG. 2A;
FIG. 3B shows a view of a more detailed structure of the distributor 307 shown in FIG. 3A;
FIG. 3C shows a schematic structural diagram of a distribution channel 314 in FIG. 3B;
FIG. 4 shows a second embodiment of the generator shown in FIGs. 1A-1B, which is taken from the same viewing angle as the generator in FIG. 3A;
FIG. 5 shows a third embodiment of the generator shown in FIGs. 1A-1B, which is taken from the same viewing angle as the generator in FIG. 3A;
FIG. 6 shows a fourth embodiment of the generator shown in FIGs. 1A-1B, which is taken from the same viewing angle as the generator in FIG. 2A;
FIG. 7 shows a fifth embodiment of the generator shown in FIGs. 1A-1B, which is taken from the same viewing angle as the generator in FIG. 2A;
FIG. 8A shows a sixth embodiment of the generator shown in FIGs. 1A-1B, which is taken from the same viewing angle as the generator in FIG. 3A;
FIG. 8B shows an axial partial enlarged schematic diagram of a falling-film heat-exchange tube group 884 with fins shown in FIG. 8A;
FIG. 8C shows a radial partial enlarged schematic diagram of the falling-film heat-exchange tube group 884 with fins shown in FIG. 8A;
FIG. 9 shows a block diagram of a controller 508 in the generator 520 shown in FIG. 5, showing specific components and connection relationships of the controller 508.

### Detailed Description of Embodiments

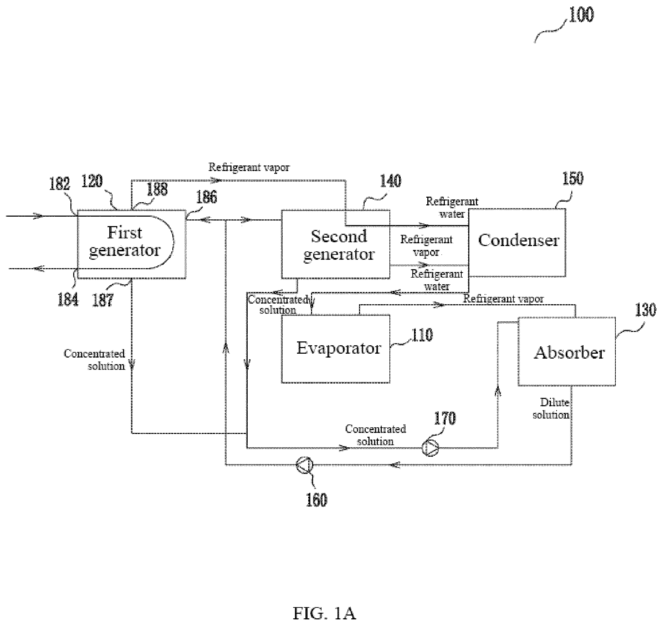

FIG. 1A shows a schematic block diagram of a component of an air conditioning system 100 of the present application, showing an application environment of the air conditioning system 100 comprising two generators.

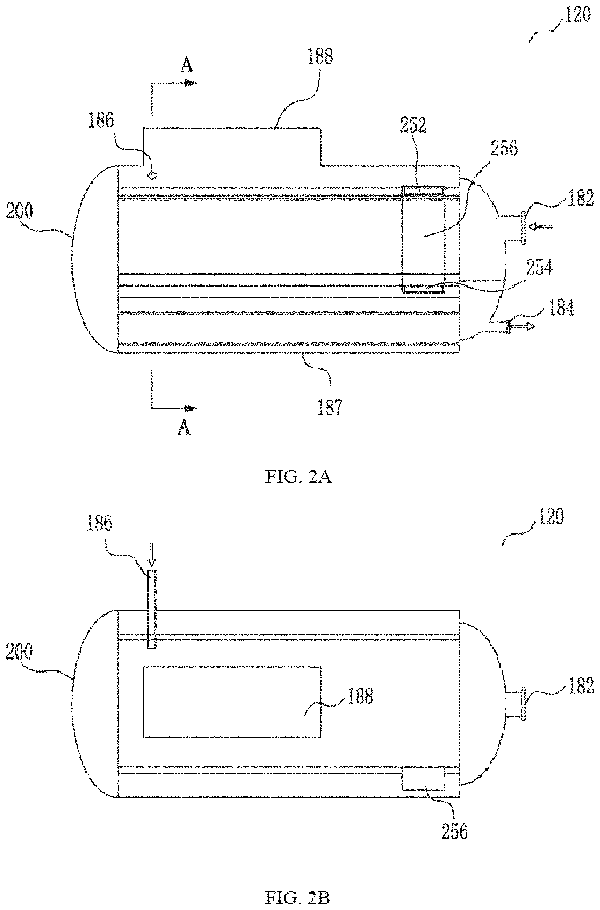

As shown in FIG. 1A, the air conditioning system 100 of the present application comprises an evaporator 110, a first generator 120, an absorber 130, a second generator 140, and a condenser 150, wherein the first generator 120 is provided with a fluid inlet 182 (a fluid here may be high-temperature vapor or hot water), a fluid outlet 184 (a fluid here may be condensate water of high-temperature vapor or a fluid with a lower temperature than the temperature at the fluid inlet), a solution inlet 186, a solution outlet 187, and a refrigerant vapor outlet 188 (see the description of FIG. 2A for details). The air conditioning system 100 comprises a solution circulation route and a refrigerant circulation route.

The path of the solution circulation route is as follows: a concentrated solution entering the absorber 130 absorbs refrigerant vapor from the evaporator 110 and then becomes a dilute solution , and the dilute solution passes through a first solution pump 160 and then flows into the first generator 120 and the second generator 140, respectively. The dilute solution flowing into the first generator 120 is heated by high-temperature vapor and then concentrated into a concentrated solution, and the dilute solution flowing into the second generator 140 is heated by the refrigerant vapor from the first generator 120 and then concentrated into a concentrated solution. After being mixed, the concentrated solutions from the first generator 120 and the second generator 140 are conveyed to the absorber 130 by a second solution pump 170 to absorb the refrigerant vapor from the evaporator 110 to complete the solution circulation.

The path of the refrigerant circulation route is as follows: the refrigerant vapor generated by the first generator 120 enters heat-exchange tubes of the second generator 140, heats a solution in the second generator 140 and then is condensed into refrigerant water, and the refrigerant water and the refrigerant vapor generated by the second generator 140 enter the condenser 150, respectively, and are further condensed in the condenser 150. The refrigerant water coming out of the condenser 150 enters the evaporator 110, absorbs heat at the outer walls of the heat-exchange tubes of the evaporator 110 and evaporates into refrigerant vapor. The refrigerant vapor enters the absorber 130 to be absorbed by the concentrated solution. The solution absorbing the refrigerant vapor enters the first generator 120 and the second generator 140 and then is heated to generate refrigerant vapor, thereby completing the refrigerant circulation.

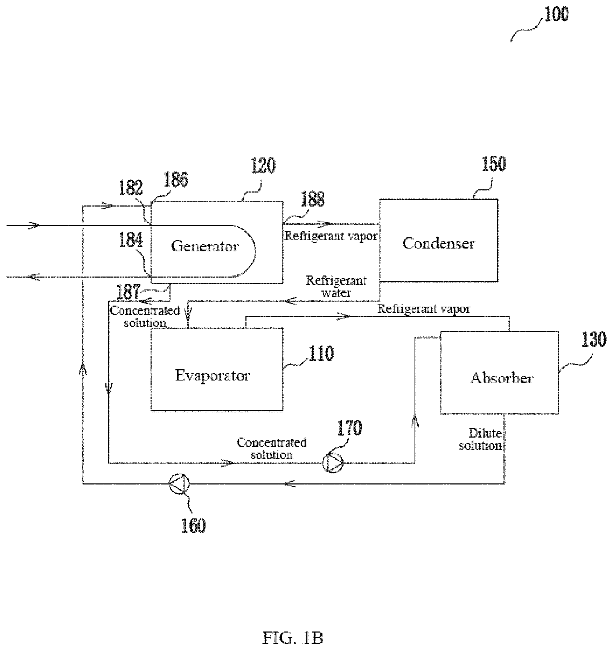

FIG. 1B shows another schematic block diagram of the component of the air conditioning system 100 of the present application. Compared with the block diagram of the component shown in FIG. 1A, the second generator 140 is not included in the block diagram of the component in FIG. 1B, which shows an application environment of an air conditioning system 100 comprising one generator 120.

As shown in FIG. 1B, the air conditioning system 100 of the present application comprises an evaporator 110, a generator 120, an absorber 130, and a condenser 150, wherein the generator 120 is provided with a fluid inlet 182 (a fluid here may be high-temperature vapor or hot water), a fluid outlet 184 (a fluid here may be condensate water of high-temperature vapor or a fluid with a lower temperature than the temperature at the fluid inlet), a solution inlet 186, a solution outlet 187, and a refrigerant vapor outlet 188 (see the description of FIG. 2A for details). The air conditioning system 100 comprises a solution circulation route and a refrigerant circulation route.

The path of the solution circulation route is as follows: a concentrated solution entering the absorber 130 absorbs refrigerant vapor from the evaporator 110 and then becomes a dilute solution, and the dilute solution passes through a first solution pump 160 and then flows into the generator 120. The dilute solution flowing into the generator 120 is heated by high-temperature vapor and then concentrated into a concentrated solution, and the concentrated solution is conveyed to the absorber 130 by a second solution pump 170 to absorb the refrigerant vapor from the evaporator 110, thereby completing the solution circulation.

The path of the refrigerant circulation route is as follows: the refrigerant vapor generated by the generator 120 enters the condenser 150, and is condensed in the condenser 150. The refrigerant water coming out of the condenser 150 enters the evaporator 110, absorbs heat at the outer walls of the heat-exchange tubes of the evaporator 110 and evaporates into refrigerant vapor. The refrigerant vapor enters the absorber 130 to be absorbed by the concentrated solution. The solution absorbing the refrigerant vapor enters the generator 120 and then is heated to generate refrigerant vapor, thereby completing the refrigerant circulation.

The following uses the first generator shown in FIG. 1A and the generator shown in FIG. 1B as examples to introduce the specific structure of the generator of the present application.

FIG. 2A shows a side cross-sectional view of an internal structure of the generator shown in FIGs. 1A-1B, which shows some specific structures of a first embodiment of the generator of the present application.

As shown in FIG. 2A, the generator 120 comprises a housing 200, and the housing 200 has two dome-shaped ends and a square middle. An upper portion of the left end of the housing 200 is provided with a solution inlet 186 for inputting a dilute solution to be concentrated into the generator 120; a top of the housing 200 is provided with a refrigerant vapor outlet 188 for outputting refrigerant vapor in a housing cavity; and a bottom of the housing 200 is provided with a solution outlet 187 for discharging a concentrated solution. An upper portion of the right end of the housing 200 is provided with a fluid inlet 182 shown from the side face for inputting a high-temperature heat source into the generator 120; A lower portion of the right end of the housing 200 is provided with a fluid outlet 184 shown from the side face for outputting condensate water generated after heat exchange of the high-temperature heat source.

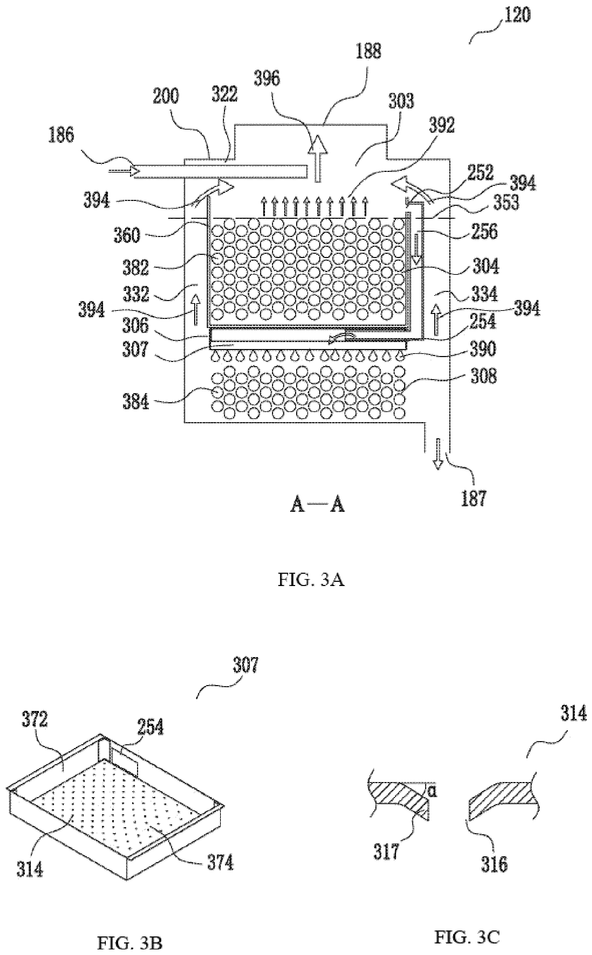

Still referring to FIG. 2A, a weir 252 and a solution introduction channel 256 shown from a side view are provided in the housing accommodating cavity of the generator 120, wherein the weir 252 is a fluid inlet of the solution introduction channel 256. The solution introduction channel 256 is used for introducing the solution in the upper accommodating cavity portion 304 of the housing into the distributor 307 in the middle accommodating cavity portion 306 (see FIG. 3A). The side cross-sectional view of the generator 120 further shows an inlet hole 254 of the distributor 307 for introducing the solution from the solution introduction channel 256 into the distributor 307.

FIG. 2B shows a top view of the generator 120 shown in FIG. 2A, more clearly showing a positional relationship between the solution inlet 186 and the refrigerant vapor outlet 188. Referring to FIG. 2B, the solution inlet 186, the refrigerant vapor outlet 188, and a fluid inlet 182 in a top-view state are shown. FIG. 2B further shows a solution introduction channel 256 in a top-view state.

FIG. 3A shows a cross-sectional view along line A-A in FIG. 2A to show more components inside the generator.

Referring to FIG. 3A, the generator 120 comprises a housing 200, and the housing 200 comprises a housing wall 322 and a housing accommodating cavity 303, wherein the housing accommodating cavity 303 comprises an upper accommodating cavity portion 304, a lower accommodating cavity portion 308, and a middle accommodating cavity portion 306 arranged between the upper accommodating cavity portion 304 and the lower accommodating cavity portion 308; and wherein the upper accommodating cavity portion 304 is further provided with a container 360 for accommodating the upper solution.

Specifically, several rows of flooded heat-exchange tube groups 382 are arranged in the upper accommodating cavity portion 304 of the housing 200. The upper solution is input into the upper accommodating cavity portion 304 through the solution inlet 186, such that the flooded heat-exchange tube group 382 is capable of being completely immersed in the upper solution. In some other embodiments, the flooded heat-exchange tube group 382 may also be partially immersed in the upper solution.

A distributor 307 is provided in the middle accommodating cavity portion 306 of the housing 200, and the distributor 307 comprises an inlet hole 254 for introducing the solution in the solution introduction channel 256 into the distributor 307. FIG. 3A further shows the weir 252 and the solution introduction channel 256 from another viewing angle in FIG. 2A, wherein the weir 252 is a fluid inlet of the solution introduction channel 256 located in the upper accommodating cavity portion 304, and the solution introduction channel 256 is used for introducing the solution in the upper accommodating cavity portion 304 of the housing into the distributor 307. In order to make the flooded heat-exchange tube group 382 in the upper accommodating cavity portion 304 completely immersed in the upper solution, the height of the weir 252 is set at a position that is not lower than an uppermost end of the flooded heat-exchange tube group 382 (indicated by a horizontal line 353 (dashed line) in FIG. 3A), such that only when the liquid level of the upper solution is equal to or higher than the horizontal line 353 at the uppermost end of the flooded heat-exchange tube group 382, the upper solution will flow into the solution introduction channel 256 through the weir 252, thereby ensuring that the flooded heat-exchange tube group 382 is completely immersed in the upper solution.

At least one row of falling-film heat-exchange tube groups 384 are arranged in the lower accommodating cavity portion 308 of the housing 200. The solution 390 from the distributor 307 is distributed to the outer walls of the heat-exchange tubes in the falling-film heat-exchange tube group 384, and forms a liquid film on the outer walls. As one embodiment, the solution 390 may be distributed on the outer wall of the falling-film heat-exchange tube group 384 close to an upper row in a uniformly dripping manner to be concentrated in a film-like form and generate refrigerant vapor. The concentrated solution drips to the heat-exchange tubes in a lower row to continue concentrating. The lower accommodating cavity portion 308 of the housing 200 is further provided with a solution outlet 187 for discharging the concentrated solution. In addition, refrigerant vapor channels 332 and 334 are provided on both sides of the housing accommodating cavity 303 for guiding the refrigerant vapor generated in the lower accommodating cavity portion 308 to the refrigerant vapor outlet 188 to be discharged.

It is worth mentioning that the tube pass of the flooded heat-exchange tube group 382 in the upper accommodating cavity portion 304 is in fluid communication with the tube pass of the falling-film heat-exchange tube group 384 in the lower accommodating cavity portion 308, such that the fluid heat source (for example, high-temperature vapor) in the flooded heat-exchange tube group 382 may flow into the falling-film heat-exchange tube group 384 after being condensed into condensate water to further heat the lower solution.

Specifically, referring to FIG. 2A and FIG. 3A, the fluid heat source (for example, high-temperature vapor) of the generator 120 enters the tube pass of the flooded heat-exchange tube group 382 through the fluid inlet 182 on the tube pass side. After completing the first step of heat exchange in the flooded heat-exchange tube group 382, the high-temperature vapor enters the falling-film heat-exchange tube group 384 in the form of condensate water. After completing the second step of heat exchange in the falling-film heat-exchange tube group 384, the condensate water is discharged from the fluid outlet 184 on the tube pass side.

FIG. 3B shows a view of a more detailed structure of the distributor 307 located in the middle accommodating cavity portion 306 shown in FIG. 3A. FIG. 3C shows a schematic structural diagram of the distribution channel 314 in FIG. 3B to show the specific structure of the distributor 307.

As shown in FIG. 3B, an inlet hole 254 (see the description of FIG. 2A above) and a distribution channel 314 are provided in the distributor 307, and the distribution channel 314 is used for conveying the solution (intermediate concentration solution) from the upper accommodating cavity portion 304 to the lower accommodating cavity portion 308. As one embodiment of the present application, the distributor 307 is a drawer-shaped component which has four side walls 372 and a bottom 374. The distribution channel 314 may be arranged on the bottom 374 of the distributor 307 for distributing the solution 390 entering the distributor 307 onto the falling-film heat-exchange tube group 384.

As one embodiment of the present application, the distribution channel 314 may be a through hole 316. Referring to the cross-sectional view of the partial enlarged view of the distribution channel 314 in FIG. 3C, and an orifice of the through hole 316 is inclined from top to bottom, such that a hole edge 317 and the bottom 374 of the distributor 307 form an inclination angle α, thereby facilitating the dripping of the solution from the through hole 316. When the solution enters the distributor 307 from the upper accommodating cavity portion 304, the through hole 316 allows the solution (intermediate concentration solution) introduced from the upper accommodating cavity portion 304 to drip to the top of the falling-film heat-exchange tube group 384 for subsequent concentration operations.

As another embodiment of the present application, the bottom of the upper accommodating cavity portion 304 may serve as the distributor 307. Specifically, a through hole is arranged at the bottom of the upper accommodating cavity portion 304, such that the upper solution in the upper accommodating cavity portion 304 flows through the through hole and is directly distributed onto the falling-film heat-exchange tube group 384 of the lower accommodating cavity portion 308.

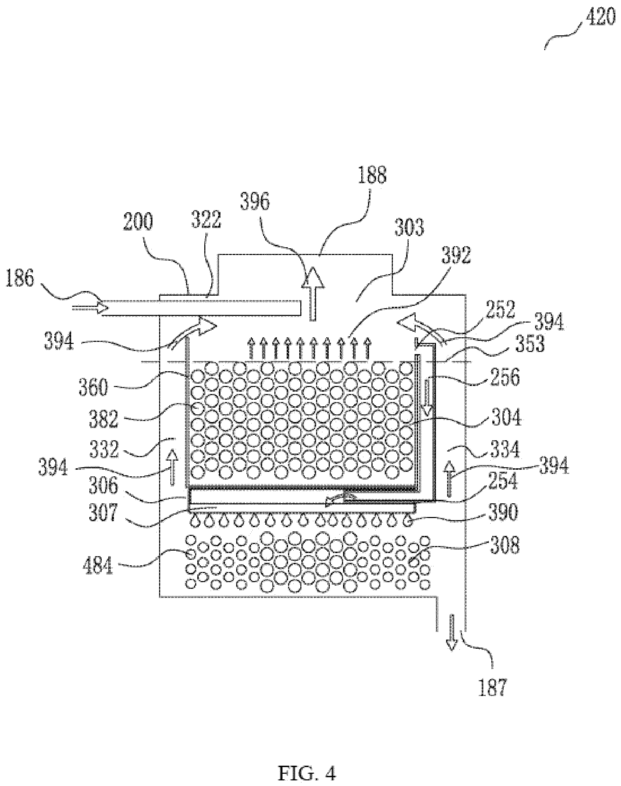

FIG. 4 shows a second embodiment of the generator shown in FIGs. 1A-1B, which is taken from the same viewing angle as the generator in FIG. 3A.

Because the structure of the generator 420 shown in FIG. 4 is similar to the structure of the generator 120 in FIG. 3A, the portions with the same structure will not be described again here. The structural difference is that the heat-exchange tubes on both sides of the falling-film heat-exchange tube group 484 shown in FIG. 4 are replaced with those with small tube diameters, that is, the calibers of the heat-exchange tubes on both sides of the falling-film heat-exchange tube group 484 are smaller than the calibers of the heat-exchange tubes in the middle portion, thereby increasing the circulation area of the refrigerant vapor and reducing the flow velocity of the refrigerant vapor. To make up for the lost heat-exchange area, the number of rows of the heat-exchange tubes may be increased to achieve the same heat-exchange area.

For the falling-film generator, the flow rate of the solution gradually decreases from the top to the bottom of the heat-exchange tube group, while the amount of refrigerant vapor generated gradually increases. Studies have shown that the falling-film heat transfer coefficient is proportional to the flow rate of the solution flowing through the falling-film heat-exchange tubes, and inversely proportional to the flow velocity of the refrigerant vapor and the diameters of the heat-exchange tubes. Therefore, after replacement with the falling-film heat-exchange tube group 484 with a small tube diameter, the heat transfer coefficient of the generator 420 in FIG. 4 is superior to that of the generator 120 in FIG. 3A.

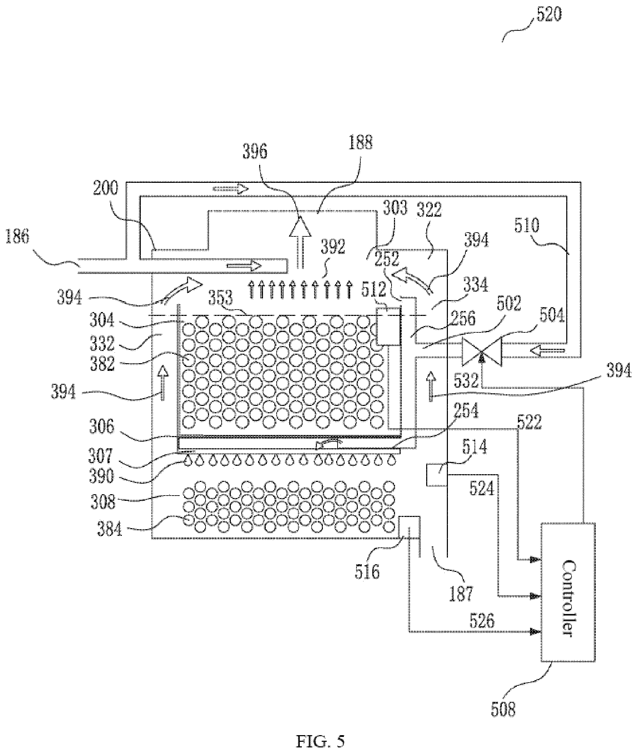

FIG. 5 shows a third embodiment of the generator shown in FIGs. 1A-1B, which is taken from the same viewing angle as the generator in FIG. 3A.

Because the structure of the generator 520 shown in FIG. 5 is similar to the structure of the generator 120 in FIG. 3A, the portions with the same structure will not be described again here. The structural difference is that a dilute solution replenishing pipeline 510 is added in the generator 520 shown in FIG. 5 for replenishing the distributor 307 with the solution to further improve the coefficients of the heat-exchange tubes of the falling-film portion of the generator and effectively control the stability of solution dripping in this portion.

Specifically, referring to FIG. 5, the replenishing pipeline 510 is a branch of a fluid pipeline at the solution inlet 186 and is in fluid communication with the solution introduction channel 256. The replenishing pipeline 510 comprises a solution replenishment inlet 502 and a liquid replenishing valve 504. In order to effectively control the opening and closing of the liquid replenishing valve 504, in this embodiment, the generator 520 is further provided with a liquid level sensor 512 located at the outlet of the flooded heat-exchange tube group, a shell pass pressure sensor 514, a solution outlet temperature sensor 516, and a controller 508. The controller 508 may control the opening and closing of the liquid replenishing valve 504 through a connecting line 532 by receiving parameters provided by the liquid level sensor 512 through a connecting line 522 or parameters provided by the shell pass pressure sensor 514 through a connecting line 524 and parameters provided by the solution outlet temperature sensor 516 through a connecting line 526.

As one embodiment of the present application, the amount of the solution provided by the dilute solution replenishing pipeline 510 accounts for 1% to 50% of the amount of the solution provided at the solution inlet 186.

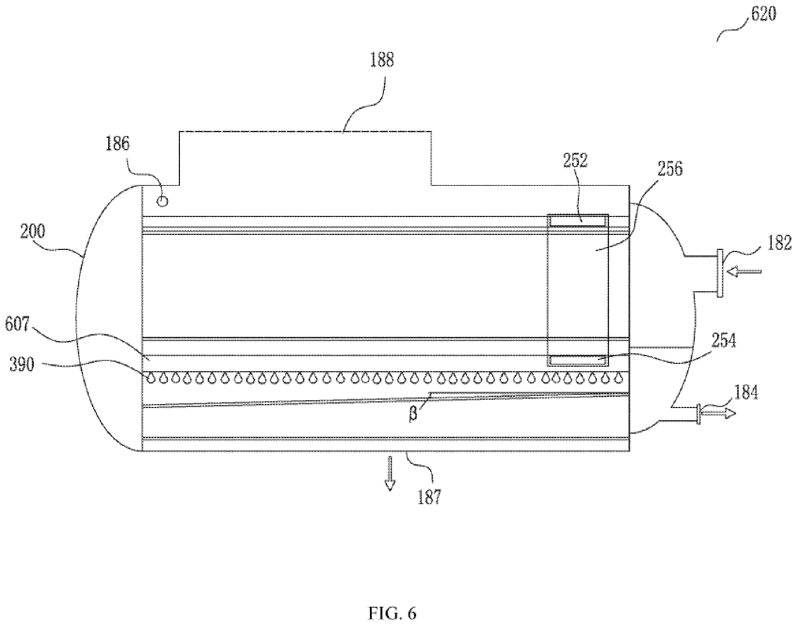

FIG. 6 shows a fourth embodiment of the generator shown in FIGs. 1A-1B, which is taken from the same viewing angle as the generator in FIG. 2A.

Because the structure of the generator 620 shown in FIG. 6 is similar to the structure of the generator 120 in FIG. 2A, the portions with the same structure will not be described again here. The structural difference is that the bottom of the distributor 607 in the generator 620 shown in FIG. 6 is placed obliquely along the length direction of the generator 620, such that the bottom of the distributor 607 has an inclination angle β along the length direction. The inclined placement of the bottom of the distributor 607 may evenly distribute the intermediate concentration solution on the outer surface of the falling-film heat-exchange tube group, thereby achieving better heat-exchange effects. As one embodiment of the present application, the inclination angle β of the bottom of the distributor 607 is within 5°.

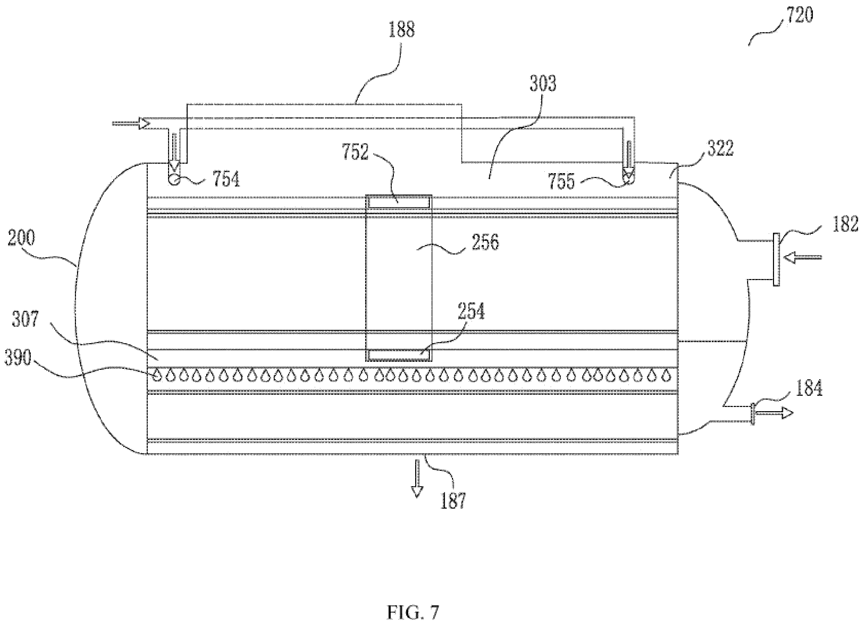

FIG. 7 shows a fifth embodiment of the generator shown in FIGs. 1A-1B, which is taken from the same viewing angle as the generator in FIG. 2A.

Because the structure of the generator 720 shown in FIG. 7 is similar to the structure of the generator 120 in FIG. 2A, the portions with the same structure will not be described again here. The structural difference is that the generator 720 shown in FIG. 7 has two solution inlets 754, 755 for inputting the upper solution. The two solution inlets 754, 755 pass through the housing wall 322 from both ends of the upper portion of the housing accommodating cavity 303 to enter the interior of the housing accommodating cavity 303. Correspondingly, the weir 752 is arranged at a position between the solution inlets 754, 755. For example, the weir 752 may be arranged at a midpoint position of a connecting line of the solution inlets 754, 755.

By arranging the solution inlets 754, 755 distributed at both ends of the upper portion of the housing accommodating cavity 303 as shown in FIG. 7 and a weir 752 located in the middle position, the intermediate concentration solution may flow into the middle position of the distributor 307, thereby being evenly distributed on the outer surfaces of the falling-film heat-exchange tubes.

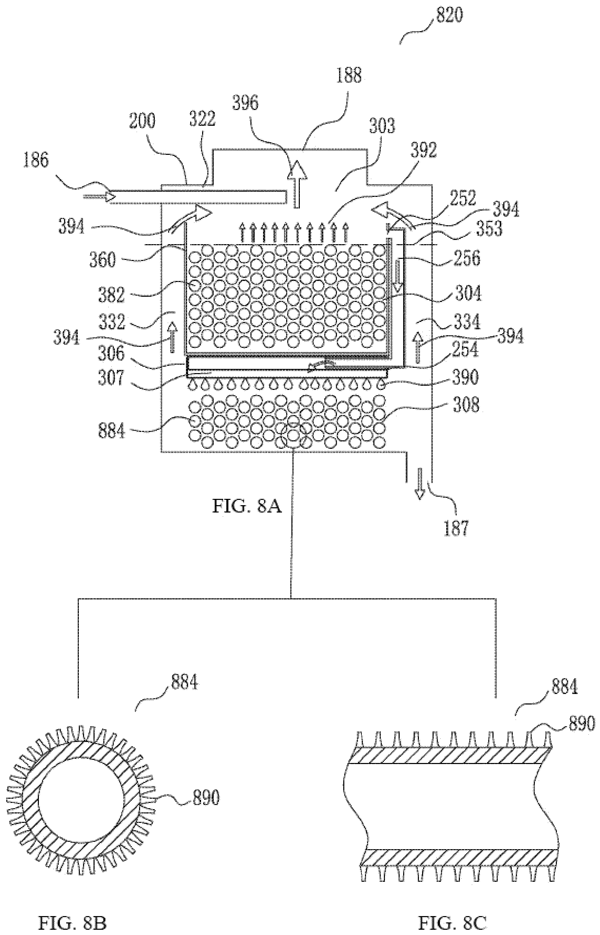

FIG. 8A shows a sixth embodiment of the generator shown in FIGs. 1A-1B, which is taken from the same viewing angle as the generator in FIG. 3A. FIG. 8B shows an axial partial enlarged schematic diagram of the falling-film heat-exchange tube group 884 with fins shown in FIG. 8A. FIG. 8C shows a radial partial enlarged schematic diagram of the falling-film heat-exchange tube group 884 with fins shown in FIG. 8A.

Because the structure of the generator 820 shown in FIG. 8A is similar to the structure of the generator 120 in FIG. 3A, the portions with the same structure will not be described again here. The structural difference is that the falling-film heat-exchange tube group 884 in the generator 820 shown in FIG. 8A uses heat-exchange tubes with fins, thereby improving the heat transfer coefficient of the falling-film heat-exchange tube group 884. An axial partial enlarged schematic diagram of the falling-film heat-exchange tube group 884 with fins 890 is shown in FIG. 8B. A radial partial enlarged schematic diagram of the falling-film heat-exchange tube group 884 with fins 890 is shown in FIG. 8C. As shown in FIG. 8B and FIG. 8C, several fins 890 are distributed on the outer side of the tube wall of the falling-film heat-exchange tube group 884, which increases the contact area between the falling-film heat-exchange tube group 884 and the intermediate concentration solution 390 to be concentrated, thereby improving the heat transfer coefficient of the falling film heat-exchange tube group 884.

Similarly, the falling-film heat-exchange tube group can further be subject to surface roughening to further improve the heat transfer coefficient of the falling-film heat-exchange tube group.

The specific working process of the generator of the present application for concentrating the dilute solution will be described below with reference to FIGs. 3A-8C.

The dilute solution to be concentrated enters the flooded heat-exchange tube group 382 in the upper accommodating cavity portion 304 through the solution inlet 186, and is heated by high-temperature vapor in the flooded heat-exchange tube group 382. The dilute solution is initially concentrated into an intermediate concentration solution, and refrigerant vapor is generated at the same time.

The initially concentrated intermediate concentration solution flows from the weir 252 into the solution introduction channel 256, and flows through the solution introduction channel 256 to the distributor 307 in the middle accommodating cavity portion 306 via the inlet hole 254 of the distributor. The distributor 307 distributes the intermediate concentration solution 390 to the outer wall of the falling-film heat-exchange tube group 384 in the lower accommodating cavity portion 308, and forms a liquid film on the outer wall. The liquid film is heated in a film-like form on the outer wall of the falling-film heat-exchange tube group 384 by a condensate water heat source in the falling-film heat-exchange tube group 384, such that the intermediate concentration solution is concentrated into a concentrated solution, and refrigerant vapor is generated at the same time.

The refrigerant vapor generated in the lower accommodating cavity portion 308 flows upward through the refrigerant vapor channels 332 and 334 (as shown by an arrow 394), converges with the refrigerant vapor (as shown by an arrow 392) generated in the upper accommodating cavity portion 304 (as shown by arrow 396), and is finally discharged from the refrigerant vapor outlet 188 located at the upper portion of the generator 120. The concentrated solution concentrated in the lower accommodating cavity portion 308 flows out from the solution outlet 187 located in the lower portion of the housing accommodating cavity 303 (see the description of FIG. 2A above). At this point, the generator 120 completes the concentration of the dilute solution.

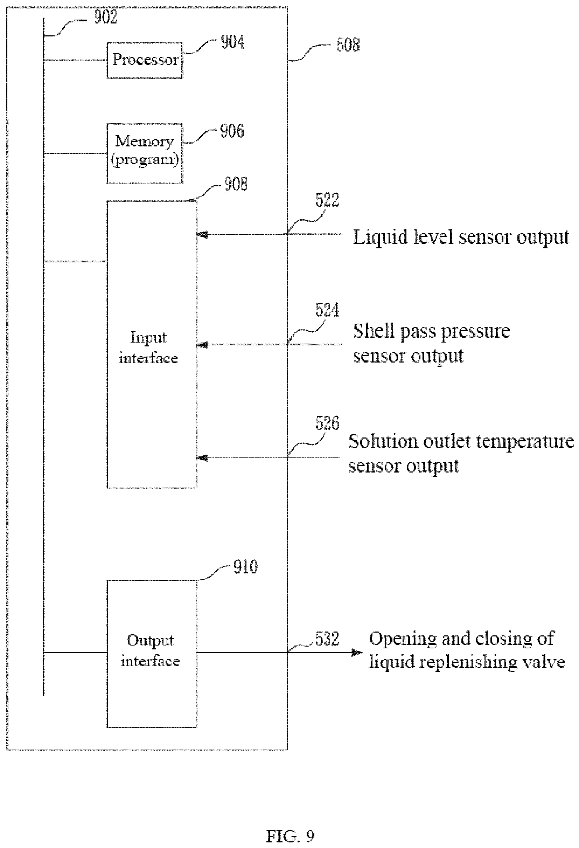

FIG. 9 shows a block diagram of the controller 508 in the generator 520 shown in FIG. 5, showing specific components and connection relationships of the controller 508.

As shown in FIG. 9, the controller 508 comprises a bus 902, a processor 904, a memory 906, an input interface 908, and an output interface 910. The processor 904, the memory 906, the input interface 908 and the output interface 910 are connected to the bus 902. The processor 904 may read programs (or instructions) from the memory 906 and execute the programs (or instructions) to process the data; The processor 904 may further write data or programs (or instructions) into the memory 906. The memory 906 may store programs (instructions) or data. By executing instructions in the memory 906, the processor 904 may control the memory 906, the input interface 908, and the output interface 910. In the present application, the controller 508 is capable of storing input parameters of each sensor shown in FIG. 5, and controlling the opening and closing of the liquid replenishing valve 504 according to the received input parameters.

The input interface 908 is configured to receive sensor parameters provided from the liquid level sensor 512 or the shell pass pressure sensor 514 and the solution outlet temperature sensor 516 through the connecting lines 522, 524, 526, respectively, convert the data of these parameters into signals identifiable by the processor 904 and store the signals in the memory 906.

The processor 904 is configured to generate opening and closing parameters that control the liquid replenishing valve 504 according to the sensor parameters stored in the memory 906. As one embodiment, sensor parameters provided by the liquid level sensor 512, the shell pass pressure sensor 514, and the solution outlet temperature sensor 516 may be stored in the memory 906, and the processor 904 is capable of reading the parameters from the memory 906 and generating opening and closing parameters that control the liquid replenishing valve 504.

The output interface 910 is configured to receive the opening and closing parameters of the liquid replenishing value 504 from the processor 904, and convert the parameters into a control signal of the liquid replenishing valve 504. The liquid replenishing valve 504 receives an executable control signal from the output interface 910 through the connecting line 532, thereby controlling the opening and closing of the liquid replenishing valve 504.

The air conditioning control system of the present application comprises, but is not limited to, the following advanced technical effects:

First, compared with the flooded generator, the generator provided by the present application is provided with a flooded heat-exchange tube group in the upper accommodating cavity portion in an accommodating cavity layering manner, such that the solution filling amount in the upper accommodating cavity portion is less, thereby allowing the boiling point of the upper solution to be lower, and reducing the adverse effect of too-high solution static pressure on heat transfer efficiency.

Second, compared with the full falling-film generator, the generator provided by the present application is provided with a falling-film heat-exchange tube group in the lower accommodating cavity portion, which can keep it away from the high-temperature vapor heat source in the upper accommodating cavity portion, thereby effectively preventing the crystallization of the outer wall of the falling-film heat-exchange tube group and improving the stability of the generator.

Third, the present application further improves the heat-exchange efficiency of the generator by providing different arrangements of the generator in the embodiments (second embodiment to sixth embodiment) shown in FIG. 4 to FIG. 8C.

Although the present application has been described in conjunction with the examples of the embodiments outlined above, various alternatives, modifications, variations, improvements and/or substantially equivalent solutions, whether known or now or shortly foreseen, may be obvious to those of at least ordinary skill in the art. In addition, the technical effects and/or technical problems described in this specification are exemplary rather than restrictive. Therefore, the disclosure in this specification may be used for solving other technical problems and having other technical effects and/or may solve other technical problems. Accordingly, the examples of the embodiments of the present application set forth above are intended to be illustrative and not restrictive. Various changes may be made without departing from the spirit or scope of the present application. The present application is therefore intended to comprise all known or earlier developed alternatives, modifications, variations, improvements and/or substantially equivalent solutions.

## Claims

1. A generator, comprising a housing (200) and a housing accommodating cavity (303) defined by the housing (200), wherein:
the housing accommodating cavity (303) comprises an upper accommodating cavity portion (304), a middle accommodating cavity portion (306), and a lower accommodating cavity portion (308), the middle accommodating cavity portion (306) being arranged between the upper accommodating cavity portion (304) and the lower accommodating cavity portion (308),
wherein a first heat-exchange tube group (382) is arranged in the upper accommodating cavity portion (304), and an upper solution is accommodated in the upper accommodating cavity portion (304), the first heat-exchange tube group (382) is at least partially immersed in the upper solution,
at least one row of second heat-exchange tube groups (384) are arranged in the lower accommodating cavity portion (308), and
a distributor (307) is arranged in the middle accommodating cavity portion (306), and the distributor (307) receives the upper solution from the upper accommodating cavity portion (304) and distributes the upper solution discharged from the upper accommodating cavity portion (304) onto the second heat-exchange tube groups (384).

2. The generator according to claim 1, wherein:
the upper accommodating cavity portion (304) is further provided with a container (360), and the upper solution is accommodated in the container (360).

3. The generator according to claim 1, wherein:
a solution introduction channel (256) is further provided in the housing accommodating cavity (303), and the solution introduction channel (256) introduces the upper solution into the distributor (307).

4. The generator according to claim 3, wherein:
the upper accommodating cavity portion (304) is further provided with a weir (252), and the weir (252) constitutes a fluid inlet of the solution introduction channel (256).

5. The generator according to claim 4, wherein:
the first heat-exchange tube group (382) is completely immersed in the upper solution, wherein the height of the weir (252) is set at a position which is not lower than an uppermost end of the first heat-exchange tube group (382).

6. The generator according to claim 1, wherein the generator further comprises:
a fluid inlet (182), wherein the fluid inlet (182) is in fluid communication with the first heat-exchange tube group (382) and is configured to input a fluid heat source into the first heat-exchange tube group (382), and
a fluid outlet (184), wherein the fluid heat source heats the upper solution during flowing through the first heat-exchange tube group (382) and then flows into the second heat-exchange tube groups (384) to continue heating a lower solution distributed on the second heat-exchange tube groups (384), and the fluid heat source heats the lower solution and then is discharged from the fluid outlet (184).

7. The generator according to claim 1, wherein:
a distribution channel (314) is provided in the distributor (307), and the distribution channel (314) distributes the solution introduced from the upper accommodating cavity portion (304) onto the second heat-exchange tube groups (384).

8. The generator according to claim 7, wherein:
the distribution channel (314) is a through hole (316).

9. The generator according to claim 1, wherein:
calibers of heat-exchange tubes on both sides of the second heat-exchange tube groups (484) are smaller than calibers of heat-exchange tubes in the middle of the second heat-exchange tube groups (484).

10. The generator according to claim 1, wherein the housing accommodating cavity (303) further comprises:
a solution replenishment inlet (502), wherein the solution replenishment inlet (502) is configured to replenish a solution to the distributor (307).

11. The generator according to claim 1, wherein:
a bottom of the distributor (607) is placed obliquely along a length direction of the generator, such that the bottom of the distributor (607) has an inclination angle (β) along the length direction.

12. The generator according to claim 11, wherein:
the inclination angle (β) at the bottom of the distributor (607) is within 5°.

13. The generator according to claim 1, wherein:
a bottom of the upper accommodating cavity portion (304) is provided with a through hole, such that the bottom of the upper accommodating cavity portion (304) constitutes the distributor (307).

14. The generator according to claim 4, wherein:
the housing (200) further comprises a housing wall (322),
the generator further comprises two solution inlets (754, 755),
wherein the two solution inlets (754, 755) are configured to input the upper solution, the two solution inlets (754, 755) pass through the housing wall (322), respectively, from both ends of an upper portion of the housing accommodating cavity (303) into an interior of the housing accommodating cavity (303), and the weir (752) is arranged at a position between the two solution inlets (754, 755).

15. The generator according to claim 1, wherein:
fins (890) are provided on the second heat-exchange tube groups (884), or surfaces of the second heat-exchange tube groups (384) are rough surfaces.

16. An air conditioning system (100), wherein:
the air conditioning system (100) comprises the generator according to any one of claims 1-15.
